**Europäisches Patentamt**

**European Patent Office**

**Office européen des brevets**

(11) Numéro de publication: **0 261 005**
**B1**

(12) **FASCICULE DE BREVET EUROPEEN**

(45) Date de publication du fascicule du brevet:
02.11.89

(21) Numéro de dépôt: **87401812.0**

(22) Date de dépôt: **04.08.87**

(51) Int. Cl.⁴: **B60S 1/48**

(54) **Dispositif pour le réchauffage du liquide d'un lave-glace de véhicule automobile.**

(30) Priorité: **28.08.86 FR 8612159**

(43) Date de publication de la demande:
**23.03.88 Bulletin 88/12**

(45) Mention de la délivrance du brevet:
**02.11.89 Bulletin 89/44**

(84) Etats contractants désignés:
**DE GB IT**

(56) Documents cités:
**DE-A- 2 829 780**
**DE-A- 2 848 742**
**DE-A- 3 333 940**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Pubellier, André, 103, Voie de Compiègne, F-91390 Morsang sur Orge(FR)**

(74) Mandataire: **Moncheny, Michel et al, c/o Cabinet Lavoix 2 Place d'Estienne d'Orves, F-75441 Paris Cedex 09(FR)**

ACTORUM AG

**Description**

La présente invention concerne un dispositif pour le réchauffage du liquide d'un lave-glace de véhicule automobile notamment terrestre et, plus particulièrement, un tel dispositif où l'on met à contribution le système de refroidissement du moteur thermique du véhicule.

Comme on le sait, pour des raisons de confort et de sécurité, la majorité des véhicules automobiles contemporains sont équipés de dispositif de lave-glace. Ces dispositifs sont habituellement associés aux essuie-glaces qui équipent le pare-brise, la lunette arrière et même, parfois, les projecteurs, et ils permettent de distribuer un jet de liquide sur la trajectoire que décrit le balai d'essuie-glace de manière à améliorer le nettoyage de la surface vitrée, en particulier lorsque la chaussée est mouillée sans qu'il pleuve ou bien par temps de brouillard.

De tels dispositifs de lave-glaces perdent beaucoup de leur efficacité par temps froid. En effet, quelles que soient les précautions que l'on prenne, que l'on adjoigne à l'eau du lave-glace des adjuvants tels que des antigels ou des détergents, le liquide du lave-glace risque de geler dans le dispositif ou bien de givrer lors de sa pulvérisation, soit avant qu'il atteigne la surface vitrée soit au contact de cette dernière dont la paroi extérieure est léchée par une couche laminaire d'air froid dûe au déplacement. Le résultat de tout ceci est qu'au lieu de contribuer au nettoyage de la surface vitrée, le liquide du lave-glace givre sur cette dernière et ainsi gêne considérablement la visibilité.

Pour tenter de remédier a ce type d'inconvénient, on a déjà proposé de réchauffer le liquide du lave-glace.

Selon la technique antérieure on a, par exemple, suggéré de disposer une résistance chauffante, associée éventuellement à un thermostat, qui est intercalée dans le circuit du lave-glace, par exemple dans le réservoir à liquide ou autour des canalisations. Une telle solution présente l'inconvénient d'être d'un coût assez élevé à l'installation et de présenter des inconvénients de fonctionnement ; en effet elle nécessite une forte consommation d'énergie électrique surtout par temps froid, c'est-à-dire à une période où la batterie est particulièrement vulnérable et l'installation électrique du véhicule déjà fortement sollicitée.

Une autre technique consiste à intercaler dans une au moins des canalisations relativement souples du circuit de refroidissement du moteur thermique, souvent désignées par la dénomination Durit, un réchauffeur. Cette solution présente un autre inconvénient car elle doit être différemment adaptée suivant le type de véhicule sur lequel elle est utilisée et même, pour un type donné, suivant le modèle car il existe souvent plusieurs types de motorisation qui ont des circuits de refroidissement différents. On voit donc qu'une telle solution ne présente pas l'universalité recherchée et qu'elle complique grandement les problèmes de stockage de gestion et d'utilisation des différents modèles de pièces détachées.

Une autre solution qui a aussi été proposée consiste à accrocher un récipient, par exemple en matière plastique, sur l'une des canalisations du système de refroidissement du moteur. Habituellement ce récipient est, par exemple, le réservoir à liquide du lave-glace. Mais cette solution s'est avérée peu efficace car la qualité des échanges thermiques est mauvaise.

Le but de l'invention est de construire un dispositif de réchauffage du liquide d'un lave-glace de véhicule automobile notamment terrestre qui ne présente pas de tels inconvénients et, en particulier, qui soit d'une utilisation pratiquement universelle.

Pour parvenir à ce but, selon l'invention, on prélève les calories nécessaires au réchauffage du liquide du lave-glace en intégrant un échangeur dans le groupe de chauffage du véhicule qui est, habituellement, un élément relativement normalisé au moins pour tous les modèles d'un même type. La solution selon l'invention présente aussi l'avantage que l'échangeur du dispositif de réchauffage du liquide selon l'invention se trouve généralement alimenté en permanence par le fluide caloporteur du système de refroidissement du moteur thermique qui est mis en oeuvre dès la mise en marche de ce dernier et ceci quelle que soit la saison, ce qui est intéressant car le réchauffage du liquide du lave-glace est rapide et permanent.

L'invention a pour objet un dispositif de réchauffage du liquide d'un lave-glace de véhicule automobile notamment terrestre équipé d'un système de refroidissement à fluide caloporteur circulant entre un moteur thermique et un groupe de chauffage muni d'un aérotherme logé dans un habitacle. Ce dispositif, qui comprend un échangeur de chaleur pour réchauffer le liquide du lave-glace, est caractérisé en ce que cet échangeur est intégré dans le groupe de chauffage traversé par le fluide caloporteur circulant dans l'aérotherme et en ce que ses canalisations d'entrée et de sortie ainsi que celles de l'aérotherme tra versent une cloison séparant l'habitacle du compartiment moteur.

D'autres caractéristiques de l'invention ressortiront de la lecture de la description qui suit et de l'examen du dessin annexé, donné seulement à titre d'exemple, où:

- la Fig.1A est une vue schématique d'un mode de réalisation du dispositif de réchauffage du liquide d'un lave-glace de véhicule automobile selon l'invention ;
- la Fig.1B est une vue analogue à celle de la Fig.1A d'une variante de réalisation ;
- les Fig.2A et 2B et 2C sont des vues schématiques de variantes d'exécution d'un autre mode de réalisation de l'invention ; et
- la Fig.3 est une autre vue qui illustre une autre caractéristique de l'invention.

Les véhicules automobiles notamment terrestres et, en particulier, leur système de refroidissement et leur groupe de climatisation étant bien conus, on ne décrira que ce qui concerne l'invention. Tout ce qui ne sera pas décrit en détail fait partie de la technique courante du secteur technique considéré.

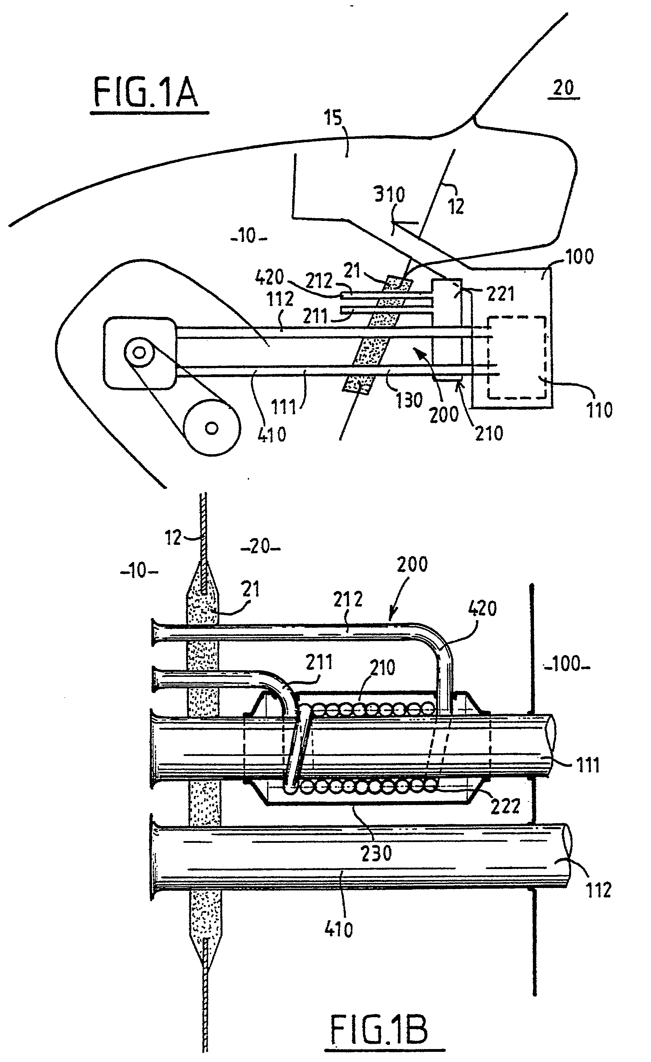

Comme on le voit sur les Fig.1A et 1B du dessin, on a illustré un compartiment moteur 10 d'un véhicule qui est séparé d'un habitacle 20 par une cloison 12. Habituellement, une telle cloison se trouve approximativement dans le prologement du pare-brise sous la planche du tableau de bord.

Le véhicule est équipé d'un système de refroidissement qui est le plus souvent logé, pour sa plus grande partie, dans le compartiment moteur. Un tel système de refroidissement comprend, entre autres, un radiateur, un ventilateur, des canalisations souples d'un type spécial connu dans la technique sous la désignation de "DURIT". Dans le système de refroidissement circule un fluide caloporteur 410, par exemple de l'eau additionnée d'un antigel. Le système de refroidissement dont on vient de parler n'est pas représenté en détail car des plus classiques mais facilement identifiable sur la Fig.1A.

Dans le compartiment moteur se trouve aussi habituellement placé un caisson d'auvent 15 qui permet de prélever de l'air à l'extérieur ; cet air est destiné à la climatisation de l'habitacle du véhicule. Ce caisson d'auvent communique avec l'extérieur grâce à des ouïes qui sont découpées sur le capot du moteur ou sur le bandeau qui se trouve entre le capot du moteur et la partie inférieure du pare-brise. Tout ceci est classique et on ne s'y étendra pas plus longuement c'est pourquoi cela n'est représenté que schématiquement sur le dessin.

Dans l'habitacle 20 se trouve aussi disposé un groupe de chauffage 100. Un tel groupe se compose habituellement d'un aérotherme 110 qui permet des échanges thermiques entre l'air et le fluide caloporteur du système de refroidissement. Ce groupe est aussi généralement muni d'un mo toventilateur non dessiné. Ce groupe de chauffage comprend aussi des canalisations 111 et 112 d'entrée et de sortie par lesquelles du fluide caloporteur du système de refroidissement est acheminé dans l'aérotherme. De la sorte, l'air extérieur qui est prélevé grâce au caisson d'auvent traverse l'aérotherme et est ainsi réchauffé au contact du fluide caloporteur du système de refroidissement. Ce groupe de chauffage est tel que son aérotherme comprend habituellement une boîte à eau 120, des flasques 115 et des conduits minces en U dits "épingles" 116, où les échanges thermiques fluide caloporteur/air se produisent.

Comme on l'a indiqué, on utilise le groupe de chauffage et, plus particulièrement, l'aérotherme 110 de ce dernier pour en faire un dispositif de réchauffage 200 du liquide 420 du lave-glace. Selon l'invention, le dispositif de réchauffage 200 comprend un échangeur 210 avec des canalisations d'entrée et de sortie 211 et 212 qui servent à véhiculer le liquide du lave-glace. Cet échangeur 210 est équipé d'une enceinte 220 qui, comme on le verra par la suite, peut se présenter sous la forme d'un récipient 221 (Fig.1A) ou d'un tube 222 (Fig.1B par exemple).

Pour améliorer la qualité des transferts thermiques qui se produisent dans l'échangeur 210, on dispose, s'il y a lieu, un calorifugeage autour de l'enceinte 220. En examinant la Fig.1A, on voit que dans cette variante d'exécution d'un mode de réalisation de l'invention, l'enceinte du dispositif de réchauffage est constitué par un récipient 221 qui est surmoulé ou rapporté sur les canalisations 111 et 112 qui assurent l'alimentation de l'aérotherme en fluide caloporteur du système de refroidissement. Dans ce mode de réalisation, on fait en sorte que les canalisations traversent la cloison 12 grâce à un joint d'étanchéité 21.

En observant notamment la Fig.1A, on voit que toutes les traversées des canalisations se font en même temps, que ce soit pour l'aérotherme ou pour l'échangeur du dispositif de réchauffage ; ceci permet d'éviter d'avoir des raccords dans l'habitacle 20 avec tous les risques de fuite que cela peut comporter ; ceci permet aussi de faire des branchements aisés des tuyauteries puisque l'ensemble se trouve du côté du compartiment moteur 10.

Sur la Fig.1B, on a représenté une variante d'exécution suivant laquelle l'enceinte se présente à la manière d'un tube 222. Suivant la technique retenue, ce tube peut être un tube métallique enroulé en hélice et en contact direct avec l'une ou les deux canalisations 111, 112 du groupe de chauffage 100. Pour améliorer les transferts thermiques, ce tube métallique peut être soudé ou brasé. Dans une autre variante d'exécution ce tube est un tube fait en matière plastique qui est alors collé ou surmoulé. Comme on le voit, un calorifugeage 230 améliore l'efficacité du dispositif de réchauffage selon l'invention. Ce calorifugeage peut être fait, par exemple, d'une coquille protectrice de matière plastique garnie par exemple de mousse de polyuréthane expansé ou d'un autre matériau de faible densité mais de très petit coefficient de conductivité thermique.

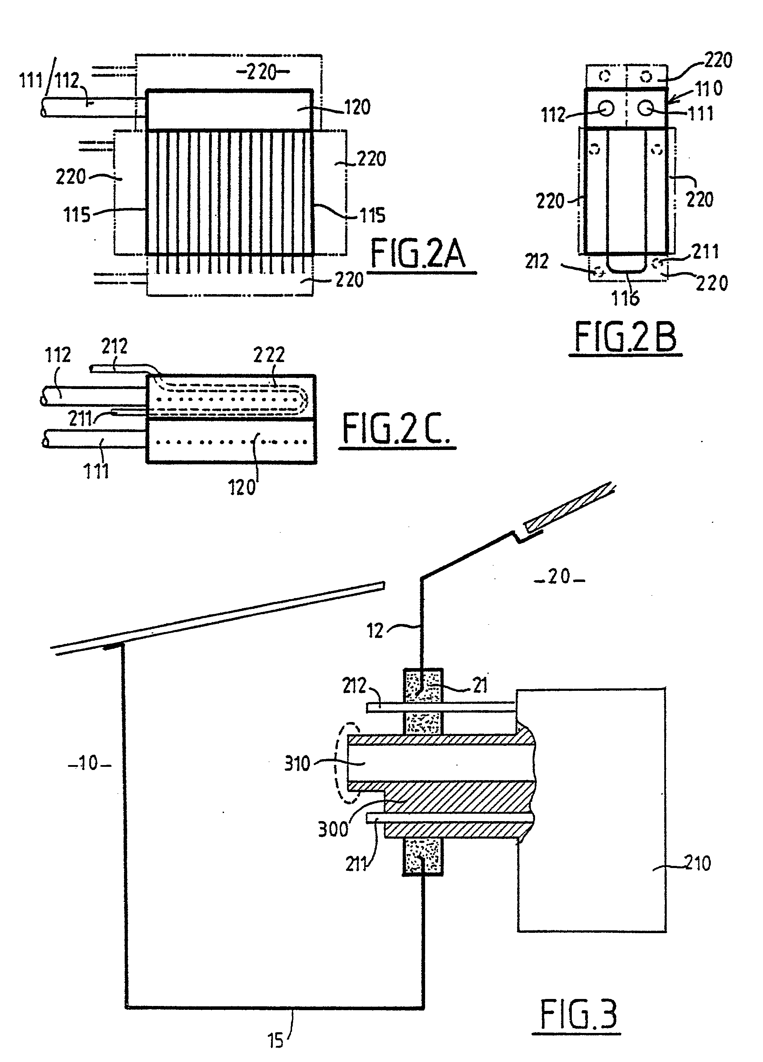

Sur les Fig.2A, 2B et 2C, on a illustré des variantes d'exécution d'un autre mode de réalisation du dispositif de réchauffage selon l'invention. Dans ce mode de réalisation l'enceinte 220, qu'elle se présente sous la forme d'un récipient 221 ou d'un tube 222 est disposée sur ou dans la boîte à eau d'entrée 120 de l'aérotherme 110 ou bien aussi soit sur les "épingles" 116 de l'aérotherme soit sur les flasques latéraux 115 de ce dernier.

Comme on l'a indiqué pour le premier mode de réalisation, quelle que soit la variante d'exécution retenue du second mode de réalisation, les canalisations 221, 212 d'entrée et de sortie de l'échangeur 210 selon l'invention peuvent être disposées comme on l'a déjà exposé de manière que les raccords puissent se faire du côté du compartiment moteur 10.

Selon une variante d'exécution illustrée schématiquement sur la Fig.3, l'une ou les deux canalisations 211 et 212 d'entrée et de sortie de l'échangeur 210 peuvent être incorporées ou venir de moulage avec un élément 300 dans lequel est ménagée une prise d'air 310 qui achemine de l'air prélevé à l'extérieur, vers le groupe de chauffage 100 en vue de la ventilation de l'habitacle 20.

Il est clair que dans tous les cas, le dispositif de réchauffage du liquide du lave-vitre selon l'invention et, en particulier ses canalisations et son échangeur, peuvent être enrobés d'une matière isolante pour éviter, ou à tout le moins réduire, les déperditions de chaleur.

On observera par ailleurs que les caractéristiques thermiques du groupe de chauffage ne sont pas affectées par la quantité de calories prélevée par le dispositif de réchauffage selon l'invention car la fréquence d'utilisation du lave-glace est relativement faible sauf dans des circonstances très particulières qui ne se produisent pas très souvent.

L'invention a été décrite à propos de modes de réalisation concernant le pare-brise d'un véhicule. Il est clair qu'elle s'applique de la même manière, moyennant des transpositions classiques s'il y a lieu, à la lunette arrière et/ou aux projecteurs ; ceci vaut pour tous les véhicules qu'ils soient terrestres ou non.

## Revendications

1. Dispositif de réchauffage (200) du liquide (420) d'un lave-glace de véhicule automobile équipé d'un système de refroidissement à fluide caloporteur (410) circulant entre un moteur thermique et un groupe de chauffage (100) muni d'un aérotherme (110) logé dans un habitacle (20), dispositif comprenant un échangeur (210) de chaleur pour réchauffer le liquide (420) du lave-glace et caractérisé en ce que cet échangeur (210) est intégré dans le groupe de chauffage (100) et est traversé par du fluide caloporteur (410) circulant dans l'aérotherme (110) et en ce que ses canalisations (211, 212) d'entrée et de sortie ainsi que celles (111, 112) de l'aérotherme traversent une cloison (12) séparant l'habitacle (20) du compartiment du moteur (10).

2. Dispositif de réchauffage selon la revendication 1, caractérisé en ce que ces canalisations (111, 112 ; 211, 212) traversent cette cloison (12) par un même joint (21) d'étanchéité et débouchent du côté du compartiment du moteur (10).

3. Dispositif de réchauffage selon la revendication 1 ou 2, caractérisé en ce que cet échangeur (210) comprend au moins une enceinte (220) où peut circuler de ce liquide (420) et en ce que cette enceinte (220) est au moins partiellement au contact d'une partie de l'aérotherme (110).

4. Dispositif de réchauffage selon la revendication 3, caractérisé en ce que cette enceinte (220, 221, 222) au moins partiellement au contact d'une partie de l'aérotherme (110), l'entoure, l'enveloppe, la recouvre ou y est insérée.

5. Dispositif de réchauffage selon la revendication 3 ou 4, caractérisé en ce que cette en ceinte (220) est un récipient (221) ou un tube (222) et en ce que cette partie de l'aérotherme (110) est l'une au moins de ses canalisations (111, 112) qui est entourée au moins partiellement.

6. Dispositif de réchauffage selon la revendication 3 ou 4, caractérisé en ce que cette enceinte (220) est un tube (222) et en ce que cette partie de l'aérotherme (110) est "une boîte à eau" (120) où est immergé ce tube.

7. Dispositif de réchauffage selon l'une quelconque des revendications 2 à 6, caractérisé en ce que l'une au moins de ces canalisations (111, 112 ; 211, 212) fait corps avec un élément (300) qui traverse cette cloison (12) et en ce que cet élément sert aussi de prise d'air (310) pour le groupe de chauffage (100).

8. Dispositif de réchauffage selon la revendication 7, caractérisé en ce que ces canalisations (211, 212) sont celles de l'échangeur (210) et débouchent ainsi que la prise d'air (310), dans un caisson d'auvent (15).

## Patentansprüche

1. Heizvorrichtung (200) für die Flüssigkeit (420) einer Scheibenwaschanlage eines Kraftfahrzeuges, das mit einem Kühlsystem mit einem zwischen einem Verbrennungsmotor und einer Heizanordnung (100) umlaufenden wärmeabführenden Arbeitsmittel (410) ausgerüstet ist, wobei die Heizanordnung (100) eine in einem Fahrgastraum (20) angeordnete Luftheizung (110) aufweist und die Vorrichtung weiter einen Wärmetauscher (210) zum Aufwärmen der Flüssigkeit (420) der Scheibenwaschanlage enthält, dadurch gekennzeichnet, daß dieser Wärmetauscher (210) in die Heizordnung (100) integriert ist und von in der Luftheizung (110) umlaufendem, wärmeabführendem Arbeitsmittel (410) durchströmt wird, und daß seine Eintritts- und Austrittsleitungen (211, 212) wie auch diejenigen (111, 112) der Luftheizung durch eine den Fahrgastraum (20) vom Motorraum (10) abtrennende Trennwand (12) durchtreten.

2. Heizvorrichtung nach Anspruch 1, dadurch gekennzeichnet, daß diese Leitungen (111, 112; 211, 212) diese Trennwand (12) über die gleiche Abdichtung (21) durchtreten und an der Seite des Motorraumes (10) austreten.

3. Heizvorrichtung nach Anspruch 1 oder 2, dadurch gekennzeichnet, daß dieser Wärmetauscher (210) mindestens eine Umschließung (220) aufweist, wo diese Flüssigkeit (420) umlaufen kann, und daß diese Umschließung (220) mindestens teilweise mit einem Teil der Luftheizung (110) in Berührung steht.

4. Heizvorrichtung nach Anspruch 3, dadurch gekennzeichnet, daß diese mindestens mit einem Teil der Luftheizung (110) in Berührung befindliche Umschließung (220, 221, 222) diese umschließt, diese einhüllt, diese bedeckt oder dort eingeführt ist.

5. Heizvorrichtung nach Anspruch 3 oder 4, dadurch gekennzeichnet, daß diese Umschließung (220) ein Behälter (221) oder ein Rohr (222) ist und daß dieser Teil der Luftheizung (110) mindestens eine dieser Leitungen (111, 112) darstellt, die mindestens teilweise umschlossen ist.

6. Heizvorrichtung nach Anspruch 3 oder 4, dadurch gekennzeichnet, daß diese Umschließung (220) ein Rohr (222) ist und daß dieser Teil der Luftheizung (110) ein "Wasserkasten" (120) ist, in den dieses Rohr eingetaucht ist.

7. Heizvorrichtung nach irgendeinem der Ansprüche 2 bis 6, dadurch gekennzeichnet, daß mindestens eine der Leitungen (111, 112; 211, 212) Teil eines Elementes (300) ist, das durch diese Trennwand (12) durchtritt, und daß dieses Element auch als Luftaufnehmer (310) für die Heizanordnung (100) dient.

8. Heizvorrichtung nach Anspruch 7, dadurch gekennzeichnet, daß diese Leitungen (211, 212) die des Wärmetauschers (210) sind und ebenso wie der Luftaufnehmer (310) in einem Luftkasten (15) austreten.

**Claims**

1. Device (200) for warming the fluid (420) of a motor vehicle windscreen washer equipped with a heat transfer fluid cooling system (410), the fluid flowing between a heat engine and a heating unit (100) equipped with an aerothermal means (110) and located in a passenger compartment (20), said device comprising a heat exchanger (210) for heating the windscreen washer liquid (420) and characterzied in that said exchanger (210) is integrated into the heating unit (100) and is traversed by the heat transfer fluid (410) flowing in the aerothermal means (110) and in that its supply and discharge pipes (211, 212), as well as those (111, 112) of the aerothermal means pass through a partition (12) separating the passenger compartment (20) from the engine compartment (10).

2. Warming device according to claim 1, characterized in that the pipes (111, 112; 211, 212) pass through said partition (12) through a same sealing joint (21) and issue on the side of the engine compartment (10).

3. Warming device according to claims 1 or 2, characterized in that the exchanger (210) comprises at least one enclosure (220), in which the fluid (420) can flow and in that said enclosure (220) is at least partly in contact with one portion of the aerothermal means (110).

4. Warming device according to claim 3, characterized in that the enclosure (220, 221, 222) at least partly in contact with a portion of the aerothermal means (110), surrounds it, envelopes it, covers it or is inserted therein.

5. Warming device according to claims 3 or 4, characterized in that said enclosure (220) is a container (221) or a tube (222) and in that said portion of the aerothermal means (110) is at least one of its pipes (111, 112), which is at least partly surrounded.

6. Warming device according to claims 3 or 4, characterized in that said enclosure (220) is a tube (222) and in that said portion of the aerothermal means (10) is a water box (120) in which said tube is immersed.

7. Warming device according to any one of the claims 2 to 6, characterized in that at least one of the pipes (111, 112; 211, 212) is integral with an element (300) traversing the partition (12) and in that said element also serves as an air intake (310) for the heating unit (100).

8. Warming device according to claim 7, characterized in that the pipes (211, 212) are those of the exchanger (210) and issue together with the air intake (310) into an air box (15).

# FIG.1A

# FIG.1B

FIG.2A

FIG.2B

FIG.2C.

FIG.3